# EUROPEAN PATENT SPECIFICATION

(11) **EP 4 110 551 B1**
(45) Date of publication and mention of the grant of the patent: **29.10.2025**
(21) Application number: 21709103.2
(22) Date of filing: 19.02.2021
(51) Int. Cl.: B24B 57/02, B24B 19/26, B05B 7/24, B05B 9/08, B05B 13/04

(54) **ROBOTIC REPAIR SYSTEMS AND METHODS**
ROBOTERGESTÜTZTE REPARATURSYSTEME UND -VERFAHREN
SYSTÈMES ET PROCÉDÉS DE RÉPARATION ROBOTIQUE

(30) Priority: 25.02.2020 US 202062981058 P
(43) Date of publication of application: 04.01.2023
(73) Proprietor: 3M Innovative Properties Company, Saint Paul, Minnesota 55133-3427 (US)
(72) Inventor: NIENABER, Aaron, Saint Paul, Minnesota 55133-3427 (US); VITALE, Christie, Saint Paul, Minnesota 55133-3427 (US); LARKING, Paul, Bracknell, Berkshire RG12 8HT (GB); ARTHUR, Jonathan, Saint Paul, Minnesota 55133-3427 (US); HERBST, Nathan, Saint Paul, Minnesota 55133-3427 (US); HEMES, Brett, Saint Paul, Minnesota 55133-3427 (US); STREY, Thomas, Saint Paul, Minnesota 55133-3427 (US); GULLICKS, Scott, Saint Paul, Minnesota 55133-3427 (US)
(74) Representative: Vossius & Partner Patentanwälte Rechtsanwälte mbB
(86) International application number: PCT/IB2021/051441
(87) International publication number: WO 2021/171155

(56) References cited:
- WO-A1-2014/063146
- WO-A1-2014/150735
- JP-A- H03 234 460
- US-A1- 2003 139 836

## Description

### BACKGROUND

Clear coat repair is one of the last operations to be automated in the automotive and vehicle original equipment manufacturing (OEM) sector. Techniques are desired for automating this process as well as other paint applications (*e.g*., primer sanding, clear coat defect removal, clear coat polishing, *etc*.) amenable to the use of abrasives and/or robotic inspection and repair.

Prior efforts to automate the detection and repair of paint defects include the system described in US Patent Publication No. 2003/0139836, which discloses the use of electronic imaging to detect and repair paint defects on a vehicle body. The system references the vehicle imaging data against vehicle CAD data to develop three-dimensional paint defect location coordinates for each paint defect. The paint defect data (e.g., defect type, defect type, etc.) and paint defect location coordinates are used to develop a repair strategy for automated repair using a plurality of automated robots that perform a variety of tasks including sanding and polishing the paint defect.

JP H03 234460A discloses a robotic repair unit as defined in the preamble of claim 9.

### BRIEF DESCRIPTION OF THE DRAWINGS

In the drawings, which are not necessarily drawn to scale, like numerals may describe similar components in different views. The drawings illustrate generally, by way of example, but not by way of limitation, various embodiments discussed in the present document.
FIG. 1 is a schematic of a robotic paint repair system in which embodiments of the present invention are useful.
FIGS. 2A and 2B illustrate schematics of a paint repair robot which may be useful in embodiments of the present invention.
FIGS. 3-6 illustrate different configurations of a self-contained fluid dispensing system according to embodiments herein.
FIG. 7 illustrates an automatic dispenser in accordance with some embodiments herein.
FIG. 8 illustrates a method of using a self-contained fluid dispensing system in accordance with embodiments herein.
FIG. 9 illustrates a method of replacing components of a self-contained fluid dispensing system in accordance with embodiments herein.
FIG. 10 illustrates a robotic repair unit in accordance with embodiments herein.
FIG. 11 illustrates a replacement kit for a self-contained fluid dispensing system in accordance with embodiments herein.

### DETAILED DESCRIPTION

Recent advancements in imaging technology and computational systems has made feasible the process of clear coat inspection at production speeds. In particular, stereo deflectometry has recently been shown to be capable of providing images and locations of paint and clear coat defects at appropriate resolution with spatial information (providing coordinate location information and defect classification) to allow subsequent automated spot repair.

As defect detection and classification techniques improve, the ability to automate the repair of detected defects becomes possible. The automated repair process presents new challenges, including providing materials such as abrasive articles for sanding or polishing, fluids such as water for wet sanding or polish, and removing used materials and waste from the vehicle surface. Described herein are some solutions for providing fluids to a repair area. Automated repair may benefit from fluids dispensed on or near a detected defect area. However, while paint spraying is done in large volumes, and requires longer pressurized lines running from a source to a dispenser, fluids used in defect repair are used at much lower volumes. For lower volume fluid usage, the presence of long fluid lines and dedicated machinery provides greater chance for clogs to develop as fluid sits and dries in the line. The long lines also cause waste, require solvents to clean and dedicated pumps to provide pressure to force fluid through the lines. Additionally, some polishes can thicken, clump or curdle if contact occurs with some metals. A solution is desired for low volume fluid use in automated robot repair units.

As used herein, the term "vehicle" is intended to cover a broad range of mobile structures that receive at least one coat of paint or clear coat during manufacturing. While many examples herein concern automobiles, it is expressly contemplated that methods and systems described herein are also applicable to trucks, trains, boats (with or without motors), airplanes, helicopters, motorcycles, etc.

As used herein, the term "robotic repair unit" refers to a robotic repair system that interacts with a surface to remove a defect. The robotic repair unit may be a stationary unit, that operates on a stationary surface, in some embodiments. In other embodiments, the robotic repair unit is a mobile repair unit that can move along a rail, track, or other mechanism such that it can address a defect on a moving surface. The robotic repair unit may have one or more end effectors with one or more tools, such as those described in U.S. Provisional Patent Application with Serial No. 62/940950, filed November 2, 2019 and Ser. No. 62/940960, also filed November 2, 2019. However, other robotic repair unit constructions are also expressly contemplated.

Paint repair is one of the last remaining steps in the vehicle manufacturing process that is still predominantly manual. Historically this is due to two main factors, lack of sufficient automated inspection and the difficulty of automating the repair process itself.

Progress has been made on the inspection portion, and with respect to the problem of abrading a surface to address a defect in a visually acceptable manner, as described in U.S. Provisional Patent Application 62/941286, filed November 27, 2019. However, as automation progresses, additional problems have arisen, including how to provide (dispense) abrasive materials, including abrasive articles, and fluids required for the abrading process, as well as how to remove or exchange used abrasive materials from the surface.

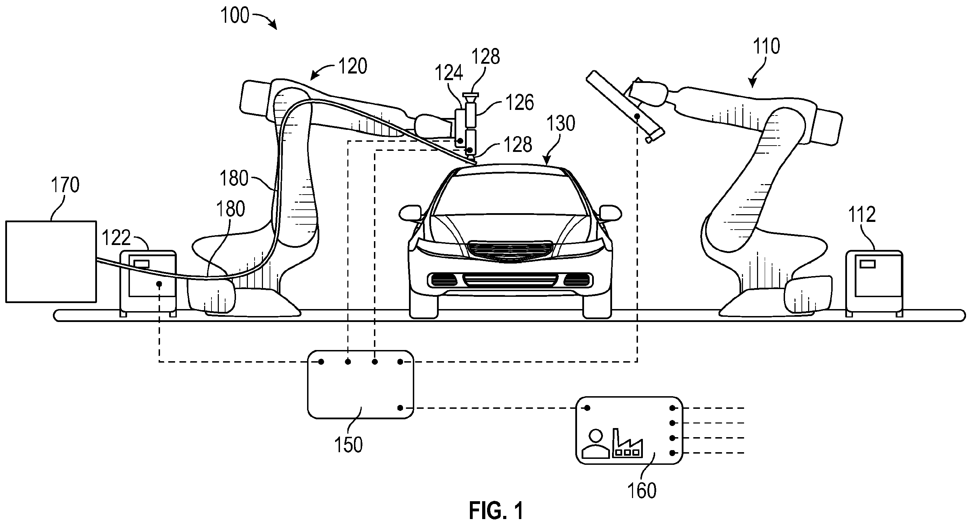

FIG. 1 is a schematic of a robotic paint repair system in which embodiments of the present invention are useful. System 100 generally includes two units, a visual inspection system 110 and a defect repair system 120. Both systems may be controlled by a motion controller 112, 122, respectively, which may receive instructions from one or more application controllers 150. The application controller may receive input, or provide output, to a user interface 160. Repair unit 120 includes a force control unit 124 that can be aligned with an end-effector 126. As illustrated in FIG. 1, end effector 126 includes two tools 128, which may be arranged, in one embodiment, as further described in U.S. Provisional Patent Application with Serial No. 62/940950 and Ser. No. 62/940960, both filed November 2, 2019. However, other arrangements are also expressly contemplated. Visual inspection unit 110 may detect defects on a vehicle surface 130, which may be repaired by repair unit 120.

The presence of a sufficiently capable inspection system 110 is important for identifying and addressing defects for repair by repair unit 120. The current state of the art in vehicle paint repair is to use fine abrasive and/or polish systems to manually sand/polish out the defects, with or without the aid of a power tool, while maintaining the desirable finish (e.g., matching specularity in the clear coat). An expert human executing such a repair leverages many hours of training while simultaneously utilizing their senses to monitor the progress of the repair and make changes accordingly. Such sophisticated behavior is hard to capture in a robotic solution with limited sensing.

Additionally, abrasive material removal is a pressure driven process while many industrial manipulators, in general, operate natively in the position tracking/control regime and are optimized with positional precision in mind. The result is extremely precise systems with extremely stiff error response curves (i.e., small positional displacements result in very large corrective forces) that are inherently bad at effort control (i.e., joint torque and/or Cartesian force)). Closed-loop force control approaches have been used (with limited utility) to address the latter along with more recent (and more successful) force controlled flanges that provide a soft (i.e., not stiff) displacement curve much more amenable to sensitive force/pressure-driven processing.

Some repair processes use fluids to facilitate an abrasive removal process. For example, fluid may assist in swarf removal, reduce abrasive clogging, and extend the life of the abrasive article while improving the consistency of cut during use. For example, some sanding operations are wet sanding operations, requiring water, or another fluid, to be dispersed on the repair area prior to, or during, an abrading operation. Additionally, polishing often requires polish to be dispensed before, or during, the polishing operation. Water, or another removal solvent, may also be dispensed to remove debris after the repair is completed.

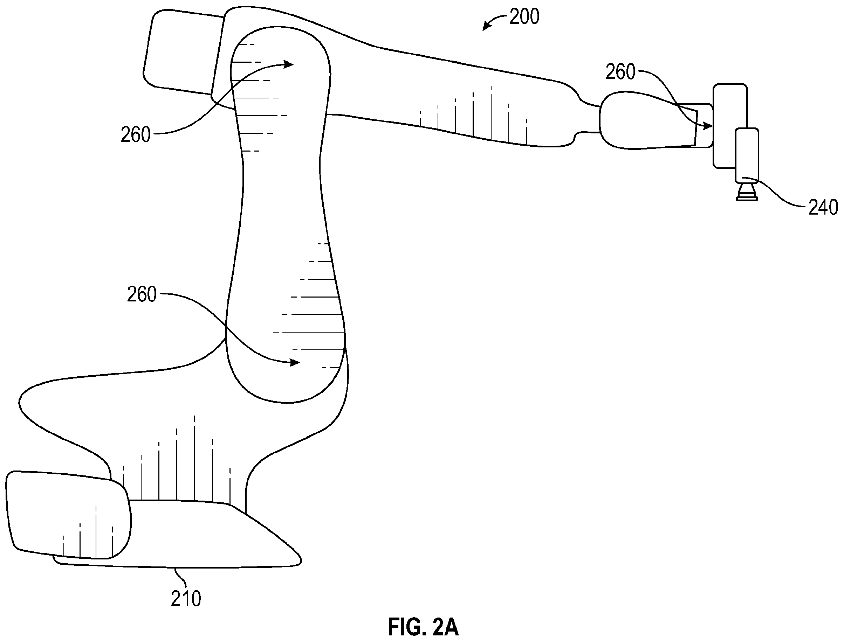

Currently, fluids needed for automated robotic systems, as shown in FIG. 1, include a fluid source 170 coupled to a fluid line 180, that extends from fluid source 170 to a dispenser (e.g. tool 128 or placed near tool 128). However, the longer that fluid line 180 needs to be, the greater pressure differential that is needed to transport fluid from source 170 to a dispensing location. This may require a dedicated pump located near source 170, or near the dispensing point, or the requirement of back-pressure on the material container. Additionally, because robot repair unit 120 has several degrees of freedom, discussed below with respect to FIG. 2A, line 180 also needs to be flexible to accommodate the different configurations needed for tools 128 to interact with defects at different points of surface 130. The fluid may need to be dispensed at a first defect 192, and then a second defect 194. As defects 192, 194 are different distances, and heights, from fluid source 170, this may require dynamic pressure control provided by a pump at source 170, and / or at the dispenser. A solution is desired that reduces the need for dedicated machinery and offers a lower cost option for providing fluids to a repair area on a work surface.

Additionally, different fluids are needed for different parts of the repair process. For example, wet sanding requires a water source 170. A polishing operation may use a first polish, from a first polish source 170, for a first polishing operation, followed by a second polish, requiring a second polish source 170, for a second polishing operation. This requires several fluid sources 170, each with a fluid line 180, to avoid contaminating or mixing dispensed fluids. Since many of these fluids are used at relatively low volumes for a given repair operation, this results in fluids sitting in fluid lines 180 when not in use, which can result in drying, separation, or clogging occurring. In addition to potentially providing subpar dispensed fluids, this can also result in damage to line 180 and any associated pump, dispenser, or nozzle located downstream of source 170. Currently, this risk is mitigated by running solvents through line 180, a dispenser and nozzle, and any pumping mechanisms, to ensure the fluid pathway is clear before connection to a new fluid source 170. However, this requires the use of solvents which are often not environmentally friendly, and it results in waste of polish or other fluids that are flushed out of line 180. A solution is desired that reduces the need for dedicated fluid delivery machinery and reduces the likelihood of damage to robotic repair unit 120 or associated components, while providing a consistent source of fluids needed for abrading operations.

FIG. 2A is a schematic of a paint repair robot which may be useful in embodiments of the present invention. A robotic repair unit 200 has a base 210, which may be stationary, in some embodiments. In other embodiments, base 210 can move in any of six dimensions, translations or rotations about an x-axis, y-axis and/or z-axis. For example, robot 200 may have a base 210 fixed to a rail system configured to travel along with a vehicle being repaired. Depending on a defect location, robot 200 may need to move closer, or further away from a vehicle, or may need to move higher or lower with respect to the vehicle. A moveable base 200 may make repairing difficult to reach defects easier.

Robotic repair unit 200 has one or more tools 240 that can interact with a worksurface. Tool 240 may include a backup pad, in one embodiment, or another suitable abrasive tool. During an abrasive operation, tool 240 may have an abrasive disc, or other suitable abrasive article, attached using adhesive, hook and loop, clip system, vacuum or other suitable attachment system. As mounted to the robotic repair unit 200, tool 240 has the ability to be positioned within the provided degrees of freedom by the robotic repair unit 200 (6 degrees of freedom in most cases) and any other degrees of freedom (e.g., a compliant force control 230 unit) with its reference frame.

Robotic repair unit 260 has several joints 260, each of which can move in x and y directions, as illustrated in FIG. 2A. Additionally, in some embodiments where joints 260 are ball joints, they may each also allow for movement in a z direction. The ability of robotic repair unit to move is important, as it allows access to defects at different positions on a vehicle to be repaired. However, it does present difficulties when designing for fluid provision from an external source.

A capability is desired that reduces the distance fluid needs to travel from a fluid source to a dispensing location. Additionally, a solution is desired that results in the reduced use of harmful or environmentally unfriendly solvents. Additionally, a solution is desired that results in improved control over fluid dispensing. Embodiments provided herein provide self-contained dispensing systems that can be mounted to a robotic repair unit and easily replaced without the need for harmful solvents.

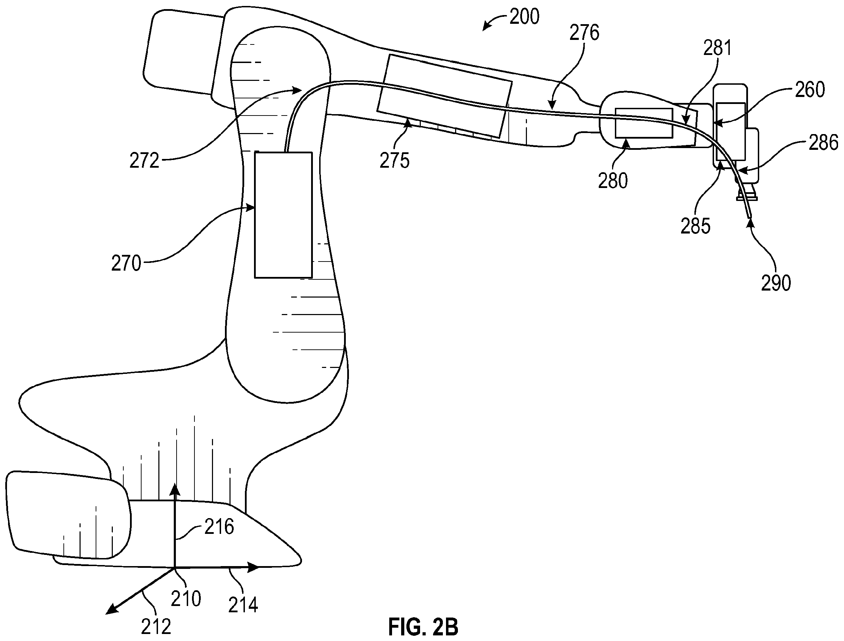

FIG. 2B illustrates several potential placements for mounting a self-contained fluid dispensing system. A dispenser may be positioned near dispensing point 290. The dispenser may include a pneumatic gun that, using an air source (not shown) atomizes an incoming fluid stream and dispenses the fluid stream through a nozzle. Many components of the self-contained system may be disposable, or easily replaceable. For example, any of the fluid line, fluid container (or container liner), as well as the nozzle may be easily replaceable. In some embodiments, replaceable components are made from a plastic that is inert with respect to the fluid being dispensed.

As illustrated in FIG. 2B, a robotic repair unit 200 can have a self-contained fluid dispensing system located in any suitable location. For example, a fluid container 285 may be located on or downstream from a force controller, such that fluid only travels through line 286 prior to reaching a dispensing location 290. This position may allow for automatic detection of a low fluid amount, for example by sensing that a current weight of container 285 is nearing or has reached empty.

In another embodiment, fluid container 280 is located on a third arm portion, such that fluid travels through line portion 281, as well as line portion 286, prior to reaching dispensing location 290. While line 281 may need to experience some flexibility, positioning fluid container in position 280 keeps a vertical travel distance for fluid to travel relatively constant.

In another embodiment, fluid container may be placed in position 275, on a second arm portion. The presence of a joint between second and third arm portions may require for line portion 276 to have some flexibility, or require some built in slack to accommodate movement of robot unit 200 during repair of defects on a vehicle surface.

In another embodiment, a fluid container 270 can be located on a first arm portion, such that fluid flows through a fluid line 272 to dispensing location 290. This position may require additional pressure control to ensure that fluid can be dispensed on repair defect locations that place a dispensing location 290 lower than a fluid exit point from fluid container 270.

As illustrated in FIG. 2B, as fluid container is positioned further away from dispensing location 290, the length of a needed fluid line increases, as does the amount of pressure needed to transport fluid to dispensing location 290.

FIG. 2B illustrates fluid containers 270, 275, 280 and 285 as mounted directly to a component of robotic repair unit 200. However, this is for the purposes of understanding only. A fluid container may also be mounted above a component, for example extending from first, second, or third arm portions to take advantage of gravitational forces to assist in dispensing fluids.

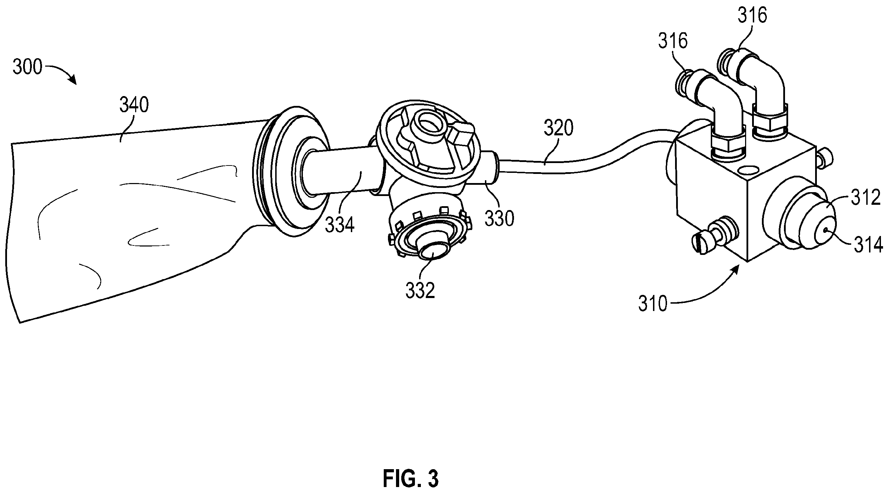

FIG. 3 illustrates an embodiment of self-contained fluid dispensing system. System 300 includes a dispenser 310, coupled to a fluid line 320, which is coupled to a fluid container 340. System 300 may also have a pump 330, which may couple to a motor (not shown) using port 332. The motor may be an air motor or a servo motor, and may control metering of the fluid. The controlled metering may also serve as an indicator of when container 340 is nearing empty, as pump 330 can volumetrically control the flow of fluid through line 320.

Dispenser 310 includes a nozzle 312 which dispenses atomized fluid in the direction indicated by arrow 314. Dispenser 310 may have one or more air intake ports 316, which couple to a pressurized air supply. However, in some embodiments, dispenser 310 atomizes fluid without an air source.

Fluid container 340, in some embodiments, is compressible. As illustrated in FIG. 3, fluid container 340 is a compressible bag that can have an expanded configuration when full, and a compressed configuration when empty. An optical sensor can be used to detect when container 340 is running low, in some embodiments. In some embodiments, fluid container 340 is placed in a more rigid mounting container, which mounts to a robotic repair assembly, either on an arm component, as described in FIG. 2B, or in another suitable position.

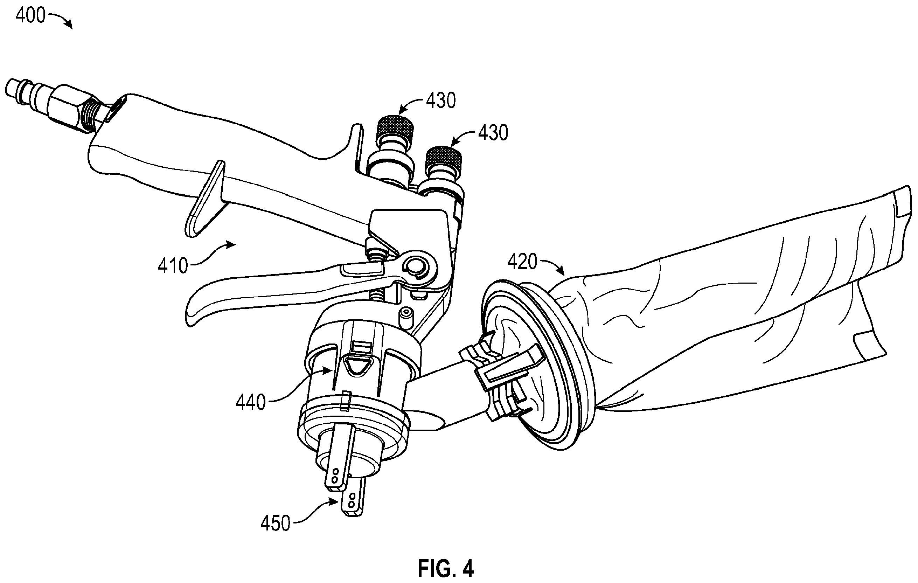

FIG. 4 illustrates another embodiment of a self-contained dispensing system 400. A dispensing gun 410 is illustrated in FIG. 4 with a trigger, however a trigger such as that illustrated in FIG. 4 may or may not be present in an automated system. Dispensing gun 410 includes a pneumatic air intake 430, which may couple to a source of compressed air for atomizing fluid through nozzle 450. A fluid source 420 is coupled directly to dispensing gun 410 by a coupler 440 that fits between gun 410 and nozzle 450. In the embodiment of FIG. 4, the coupler 440, nozzle 450, and / or fluid container 420 may be made from disposable materials. Coupler 440 may be designed such that it can be easily decoupled from dispensing gun 410 when a different fluid than present in container 420 is needed for a repair operation.

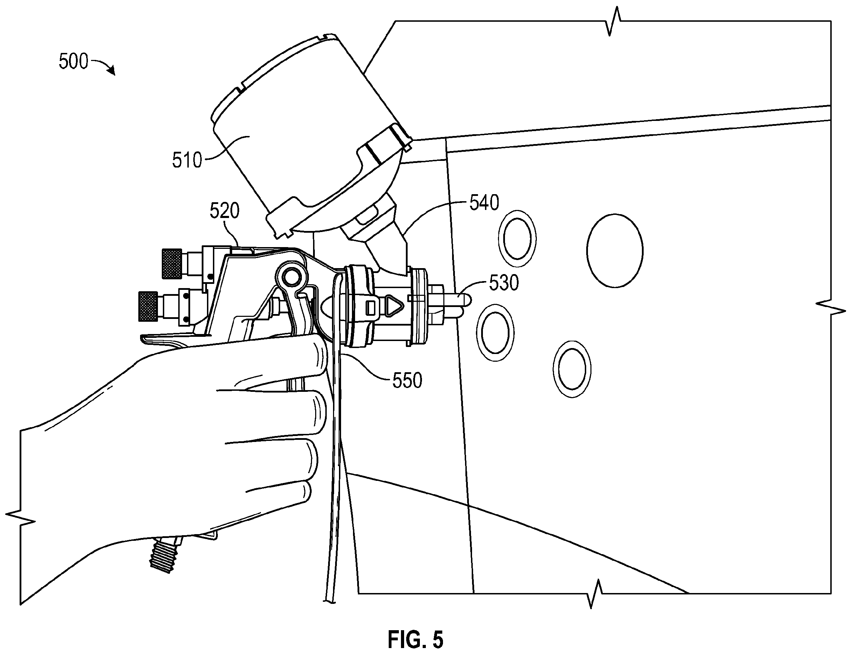

FIG. 5 illustrates another embodiment of a self-contained dispensing system 500. A dispensing gun 520 is directly coupled to a fluid container 510, through a coupler 540. Air is provided through line 550, so that fluid is dispensed through nozzle 530 in an atomized spray. Fluid container 510 is a rigid container and may have a fluid liner included therein such that container 510 does not need to be replaced, but can receive a new liner containing a fluid to be dispensed.

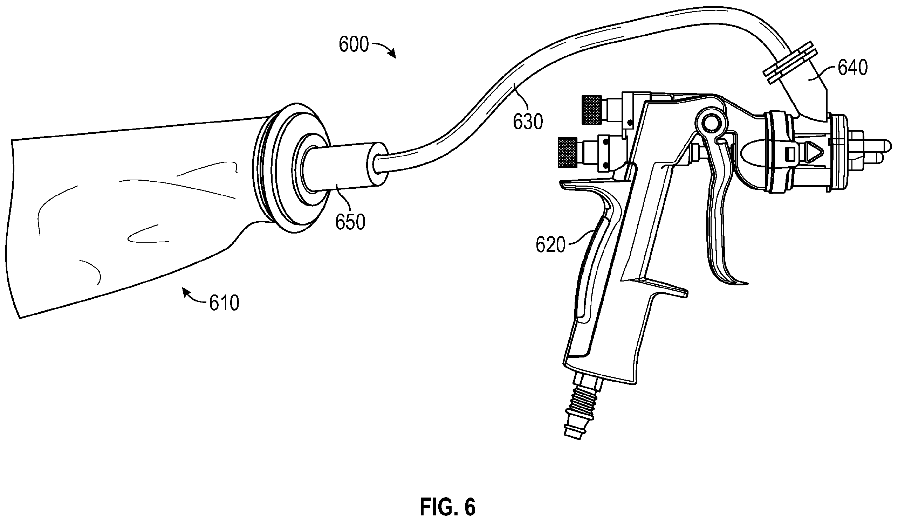

FIG. 6 illustrates another embodiment of a self-contained fluid dispensing system 600, including a fluid source 610 coupled to a dispenser 620 through a fluid line 630. Fluid line 630 couples to dispenser 620 through a first coupler 640. Fluid source 610 couples to fluid line 630 through a second coupler 650. Fluid line 630 is flexible, in one embodiment, such that it can accommodate movement of arm components of a robotic repair unit during a repair. While not shown in FIG. 6, in some embodiments fluid container 610 is a fluid liner held in place by a rigid fluid container which is mounted to a robot repair unit.

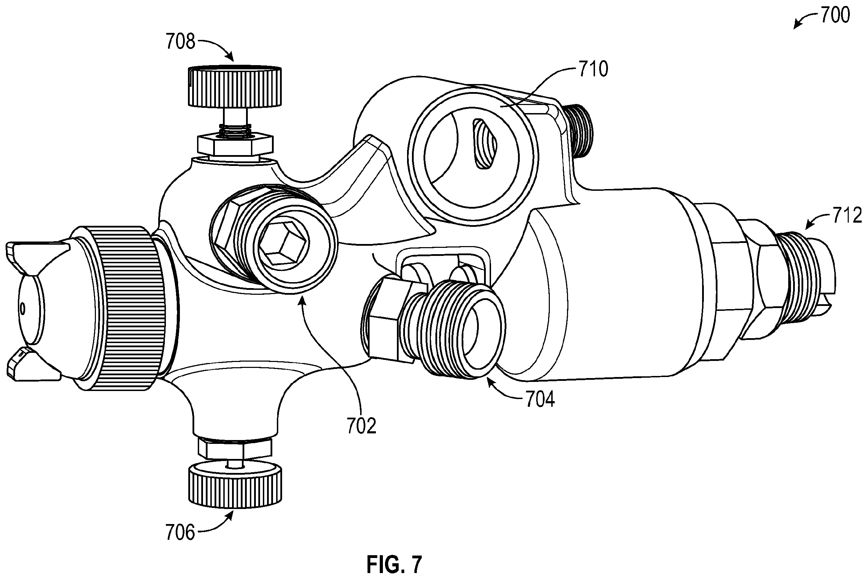

FIG. 7 illustrates a pneumatic dispenser for an automated repair unit. However, while pneumatic dispensers are described herein as one possible fluid dispenser, other configurations are also possible such as a fluid spray nozzle or a pressure pot that pressurizes material directly at the source. Pneumatic dispenser 700 includes an air inlet 702 and a fluid inlet 704. A fluid dispensing control 706 may allow for adjusting of a fan spray width, for example by increasing or reducing experienced fluid pressure. Pneumatic dispenser 700 may also include an air flow control 708, which may allow for reducing or increasing air pressure. Dispenser 700 may include a mounting mechanism 710, which may allow for mounting to a tool, or an end effector, of a robotic repair unit. System may also have a fluid needle adjustment 712, in some embodiments.

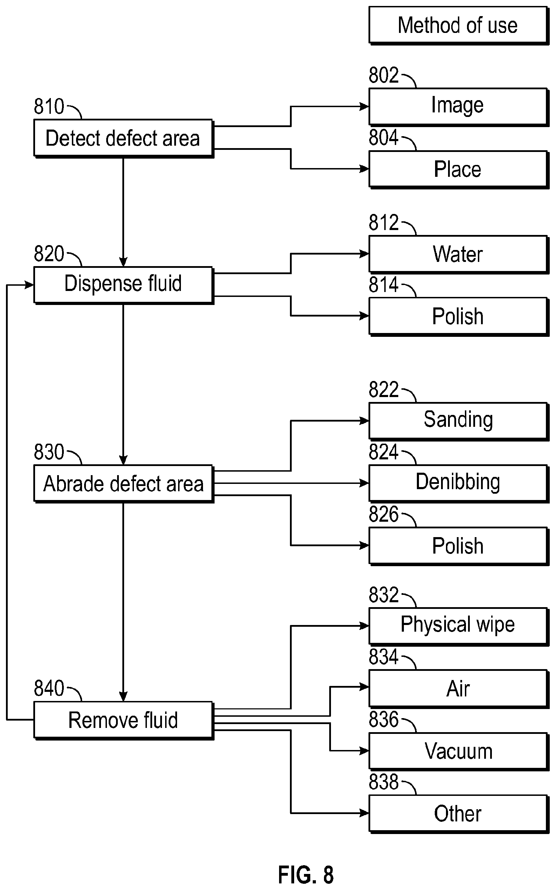

FIG. 8 illustrates a method of robotic defect repair in accordance with an embodiment of the present invention. Method 800 is an overview of how a robotic repair system repairs a defect in accordance with at least some embodiments described herein.

In block 810, a defect is detected and the defect location and characteristics identified. Subsequently, instructions related to the detected defect are received by a repair unit from a robot controller, such as application controller 150 in FIG. 1, for example. Without limitation to the embodiments discussed herein, the defect area can be detected by an image 802 of the surface, or can be associated with a position on the vehicle 804 with the defect characteristics identified.

Blocks 820, 830, and 840 concern the steps of repairing a detected defect. Defects may be repaired in one or more abrasive operations. For example, a defect area may first be sanded, then polished. A defect may be inspected in between the sanding and polish step and, depending on whether the defect was successfully repaired, the steps of sanding and / or polishing may be repeated.

In block 820, a fluid is dispensed onto a repair area. The fluid may be, for example, water 812 for a wet sanding or wet polishing operation. The fluid may also be, for a polishing operation, polish 814. Polish 814 may actually refer to a variety of polishes useful for different operations. Different polishes 814 may have different viscosities and different abrasive characteristics. Other fluids 816 may also be dispensed, depending on the repair operation. The fluid may be dispensed using a self-contained fluid dispensing system, such as those described in embodiments herein or any other suitable self-contained fluid dispensing system.

In block 830, the defect is abraded. Abrading a defect may include a sanding operation 822, a denibbing operation 824, a polishing operation 826, or another operation 828. Abrading the defect includes bringing a tool into contact with the defect area. Abrading may occur before, after, or simultaneously with the fluid dispensing of block 820.

In block 840, the fluid and/or waste is removed from the work surface. Removing the fluid may also include removing waste produced from the abrasive operation, including clear coat or paint "swarf". Removing fluid may be done manually, during a human inspection operation, or may be done automatically by a tool on the repair unit or by another robotic unit altogether. Fluid removal may include a physical wiping operation 832, with an absorbent article, using a blowing operation 834, a vacuum operation 836, or another suitable operation 838.

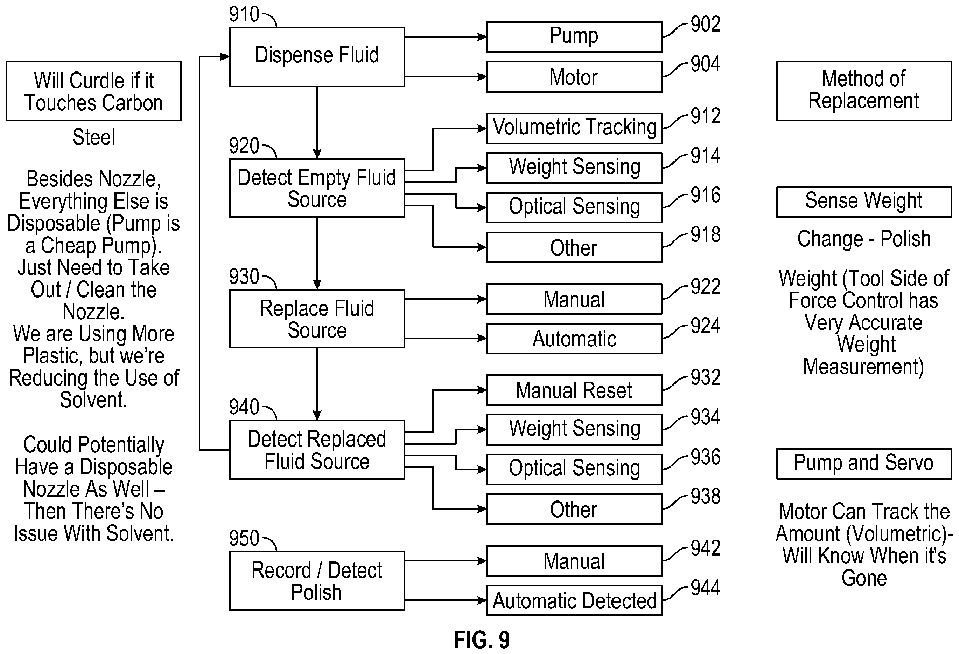

FIG. 9 illustrates a method of replacing a self-contained fluid dispensing system. The system may include, for example, components similar to those described with respect to FIGS. 4-6, or another suitable self-contained system. At least some systems contemplated herein are designed for dispensing polish, which may clump or curdle if it contacts carbon steel. For that reason, it is desired that the polish be contained such that it can be replaced without contacting metal components of the robotic repair unit.

In block 910, a fluid is dispensed by the fluid system. The fluid may be dispensed using a pump 902, which may have an associated motor 904. However, other fluid movement mechanisms are also contemplated, as indicated in block 906. For example, a fluid system may not require a pump for a fluid to dispense, if the fluid viscosity is sufficiently low, and the fluid container is placed such that gravitational forces provide sufficient pressure. Additionally, a fluid container may be coupled to a compressed air source, which may provide compressed air at a pressure sufficient to cause the fluid to flow to a dispenser.

In block 920, it is detected that a fluid container is empty, or running low. The low fluid level can be detected using a parameter-based tracking, as indicated in block 912, such as volume, time, weight, optical or a contact switch. For example, a pump or motor system may be able to volumetrically track fluid that has left a fluid source. The low fluid level can also be detected using weight sensing 914, for example in an embodiment where the fluid container is mounted on the tool side of the force control. The force control is sensitive to weight, and can accurately measure either a change in weight corresponding to almost (or all) of the fluid leaving the fluid container, or may detect that a current weight corresponds to a low fluid level. In another embodiment, the low fluid level can be detected with an optical sensor 916. For example, polish may not be optically clear. In an embodiment, such as that illustrated in FIG. 5, an optical sensor may be able to detect a current fluid level and detect when a current fluid level drops to or below a replacement level. In another embodiment, such as that illustrated in FIGS. 3 and 4, for example, an optical sensor may be able to detect that a bag-type fluid container has reduced in volume, or compressed enough that a low fluid level has been achieved.

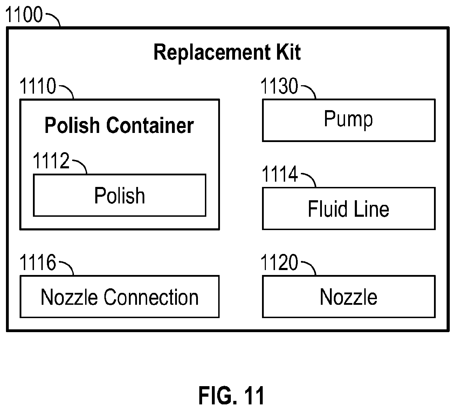

In block 930, a fluid source is replaced. A self-contained fluid dispensing system may contain a dispenser, a fluid container, a fluid liner within the fluid container, a line connecting the container to the dispenser, and a nozzle. Replacing the fluid source may include replacing some or all of these components. In order to avoid the use of potentially carcinogenic or otherwise harmful solvents, it may be preferred that the components interacting with a fluid being dispensed be replaced each time a fluid is changed. For example, a used fluid liner and a used fluid line may be replaced with a new fluid liner, filled with the fluid to be dispensed, and a new fluid liner. In some embodiments, a nozzle may also be replaceable. In embodiments where the fluid is dispensed directly from a container, the used container is replaced with a new container. The new components may come from a kit, in some embodiments and as illustrated in FIG. 11, such that the new fluid-filled liner or fluid-filled container is filled with a predetermined amount of a given fluid.

Fluid replacement may require some manual intervention, as indicated in block 922. For example, when a low or empty fluid level is detected, a robotic repair unit may indicate, either visually, audibly, or through another suitable alert, that replacement is needed. A human operator may then remove the used components and replace them with new components. In another embodiment, at least some portion of the replacement is automatic, as indicated in block 924. For example, the robotic repair unit, or another robotic unit, may retrieve the used components, dispose of the used components, retrieve the new components, and / or mount the new components.

In block 940, the replaced fluid source is detected. The robotic repair unit may detect that the fluid source has been replaced, in some embodiments. Replacement may be detected, for example, by an operator manually resetting a fluid counter, as indicated in block 932. For example, in the embodiment where the self-contained fluid dispensing system includes a servo motor that can measure a volume of fluid dispensed, manual reset may include resetting a count to zero. Detecting a new fluid source unit may also include a weight sensor detecting that a tool-side weight corresponds to a full fluid container, as indicated in block 934, for embodiments where the fluid container is mounted on a portion of the robotic repair unit where weight sensing is feasible. Detecting the replaced fluid source unit may also include optical sensing, for example an optical sensor detecting that a new fluid container has been reinstalled. Other suitable sensing systems may also be feasible for other embodiments.

In block 950, the type of fluid installed on the robotic repair unit is recorded. For example, in embodiments where the new components are part of a kit, the new fluid container or liner may include a barcode / QR code or other signifier of the contents. Depending on the parameters of the fluid installed, a controller may alter a repair trajectory or force profile of an abrasive tool. In embodiments where the new components include a signifier, the fluid parameters may be automatically detected, as indicated in block 944, and communicated to a controller. However, it is also contemplated that manual recording, as indicated in block 942, may also be done. It is important to note that, with robotic repair units, a lack of knowledge or control of materials used in the process can introduce error or even failure in the repair equipment, which can result in damage to the repair equipment or the vehicle being repaired.

Components of the self-contained fluid dispensing system are designed to be disposable, in some embodiments, to reduce the need for unpleasant, harmful and environmentally caustic chemicals. In some embodiments, the only component not replaced is the dispenser itself. The replaceable components, including the liner, container, fluid line, and nozzle may all be made of a plastic material that is cheap enough to replace with each exchange of fluid components. In embodiments where the nozzle is part of the components being replaced, the replacement is essentially solvent-free.

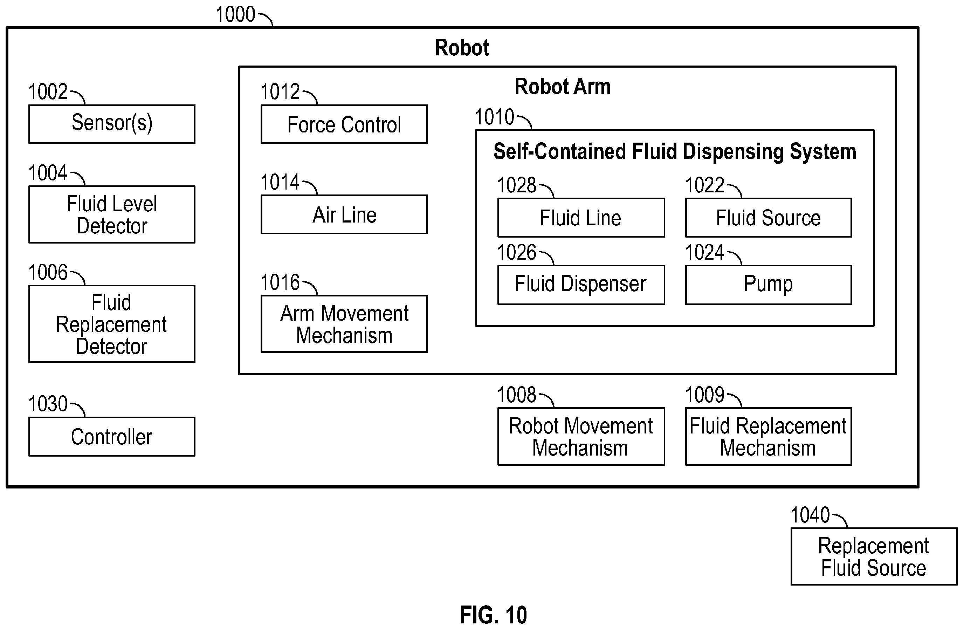

FIG. 10 illustrates a robotic repair unit 1000 in accordance with embodiments discussed herein. Robot 1000 may have a robotic movement mechanism 1008 that may allow for robot 1000 to move, for example with respect to a vehicle being repaired. Robot 1000 also includes a controller 1030 that may control movement of robot 1000 and its components, either based on manual input or based on input received from sensors 1002. Robot 1000 may also include sensors specific to a self-contained fluid dispensing system 1020, such as a fluid level detector 1004 and a fluid replacement detector 1006. However, these sensors may be mounted separately from the robot 1000, on the robot arm 1010, or as part of the self-contained fluid dispensing assembly 1020.

Robotic repair unit 1000 includes a robot arm 1010. Robot arm 1010 includes one or more tools on an end effector (not shown) that are mounted to a force control 1012. Robot arm 1010 may also have an air line 1014 mounted, in embodiments where compressed air is needed to force fluid through fluid line 1028 to dispenser 1026. Robot arm 1010 may have its own movement mechanism 1016 which facilitates placement of arm components, and of tools (not shown) with respect to a surface being repaired.

Self-contained fluid dispensing system is mounted on robot arm 1010. As described above, self-contained fluid dispensing system may be mounted to any suitable arm component of a robot arm 1010. However, it may be beneficial for fluid source 1022 to be mounted on a tool side of force control 1012 to take advantage of weight sensing. Other placements are also expressly contemplated, however. Self-contained fluid dispensing system includes components intended to be disposed after a single use, to reduce the use of harmful solvents in the repair area. A fluid line 1028 transports fluid from fluid source 1022 to fluid dispenser 1026. Depending on a viscosity of the fluid being dispensed, as well as the relative placement of fluid source with respect to dispenser 1026, a pump 1024 may be necessary to facilitate fluid flow. In some embodiments, an air line 1014 is provided to fluid source 1022 to provide an additional source of pressure on fluid being dispensed to facilitate an even flow.

When fluid source 1022 is empty, or has reached a low enough level that replacement is indicated, replacement components are retrieved from replacement component source 1040. Replacement of fluid line 1028, fluid source 1022, and / or pump 1024 may occur manually, semi-automatically, or automatically.

FIG. 11 illustrates a replacement kit for a self-contained fluid dispensing system. Replacement kit 1100 includes a fluid container 1110 which contains fluid 1112. Fluid may be water, a polish, a wax, or another fluid for a vehicle repair operation. The fluid container 1110 is a single use container intended to be replaced after fluid 1112 is used. Fluid container 1110 may include an opening 1113 that can couple to a source of compressed air, which provides additional pressure to force fluid 1112 to dispense. However, opening 1113 may not be needed in embodiments where fluid 1112 has a low enough viscosity to flow on its own, or where a pump 1130 is present to assist in facilitating fluid flow.

Replacement kit 1100 may also include a connection 1116 to couple fluid container 1110 directly to a dispenser, or directly to a fluid line 1114. In some embodiments, replacement kit 1100 also includes a nozzle 1120. Connection 1116 may couple fluid container 1110 directly to nozzle 1120, such that a fluid line 1114 is not required.

In some embodiments, fluid container 1110 may be a liner that is coupled to fluid line 1114 through a separate container that does not require replacement each time that fluid needs replenishing.

A method of replacing a fluid source on a robotic repair system as defined in claim 1 is presented. Further embodiments are presented in the dependent claims.

A robotic repair unit as defined in claim 9 is presented. Further embodiments are presented in the dependent claims.

Reference throughout this specification to "one embodiment," "certain embodiments," "one or more embodiments," or "an embodiment," whether or not including the term "exemplary" preceding the term "embodiment," means that a particular feature, structure, material, or characteristic described in connection with the embodiment is included in at least one embodiment of the certain exemplary embodiments of the present disclosure. Thus, the appearances of the phrases such as "in one or more embodiments," "in certain embodiments," "in one embodiment," or "in an embodiment" in various places throughout this specification are not necessarily referring to the same embodiment of the certain exemplary embodiments of the present disclosure.

## Claims

1. A method of replacing a fluid source (170) on a robotic repair system (120), the method comprising:
detecting, using a first sensor, a replacement fluid level in a used fluid source,
wherein the used fluid source is mounted on a tool side of a force control unit (124) of the robotic arm, and wherein the force control is capable of detecting a change in weight of the fluid container corresponding to a low fluid level;
removing the used fluid source;
installing a new fluid source; and
detecting, using a second sensor, the new fluid source.

2. The method of claim1, wherein installing the new fluid source (170) comprises installing a new fluid source in a container mounted to the robotic repair system (120).

3. The method of claim 1 or 2, wherein installing the new fluid source (170) comprises connecting the new fluid source to a fluid dispenser mounted to the robotic repair system (120).

4. The method of claim 3, wherein the new fluid source (170) is connected to the fluid dispenser through a fluid line (180).

5. The method of any of claims 1-4, wherein the new fluid source (170) is mounted on a tool side of the robotic repair system (120).

6. The method of claim 5, wherein the first sensor is a weight sensor that detects a weight of the used fluid source (170) indicative of the replacement fluid level.

7. The method of any of claims 1-6, wherein first sensor or the second sensor are each selected from: a weight sensor, a volumetric sensor, or an optical sensor.

8. The method of any of claims 1-7, and further comprising: detecting the fluid type in the new fluid source and providing the detected fluid type to a controller associated with the robotic repair unit.

9. A robotic repair unit (120) comprising:
a robotic arm with a force control coupled to an end effector (126) containing an abrasive tool; and
a self-contained fluid dispensing system (300) configured to dispense a fluid on a worksurface, wherein the self-contained fluid dispensing system comprises:
a fluid dispenser (310);
a fluid container (340) coupled to the fluid dispenser, and wherein the fluid container is mounted to the robotic repair unit, **characterized in that** the fluid container is mounted on a tool side of a force control unit (124) of the robotic arm; and
the force control capable of detecting a change in weight of the fluid container corresponding to a low fluid level.

10. The robotic repair unit (120) of claim 9, wherein the fluid container (340) comprises a fluid liner which is configured to contain fluid to be dispensed.

11. The robotic repair unit (120) of claim 10, and further comprising a fluid line (180) coupling the fluid liner to the fluid dispenser (310).

12. The robotic repair unit (120) of claim 11, and further comprising a single use pump.

13. The robotic repair unit (120) of any of claims 9-12, wherein the fluid dispenser (310) comprises a disposable nozzle.

14. The robotic repair unit (120) of any of claims 9-13, and further comprising a detector configured to identify a fluid type in a fluid container.

15. The robotic repair unit (120) of claim 14, wherein the detector is configured to identify the fluid type based on a signifier on the fluid container.

## Patentansprüche

1. Ein Verfahren zum Ersetzen einer Fluidquelle (170) an einem Roboterreparatursystem (120), das Verfahren aufweisend:
Detektieren, unter Verwendung eines ersten Sensors, eines Ersatzfluidpegels in einer verwendeten Fluidquelle, wobei die verwendete Fluidquelle auf einer Werkzeugseite einer Kraftkontrolleinheit (124) des Roboterarms montiert ist und wobei die Kraftkontrolle zum Detektieren einer Gewichtsänderung des Fluidbehälters, die mit einem niedrigen Fluidpegel korrespondiert, in der Lage ist;
Entfernen der verwendeten Fluidquelle;
Installieren einer neuen Fluidquelle; und
Detektieren, unter Verwendung eines zweiten Sensors, der neuen Fluidquelle.

2. Das Verfahren nach Anspruch 1, wobei das Installieren der neuen Fluidquelle (170) das Installieren einer neuen Fluidquelle in einem Behälter, der an dem Roboterreparatursystem (120) montiert ist, aufweist.

3. Das Verfahren nach Anspruch 1 oder 2, wobei das Installieren der neuen Fluidquelle (170) ein Verbinden der neuen Fluidquelle mit einer Fluidabgabevorrichtung, die an dem Roboterreparatursystem (120) montiert ist, aufweist.

4. Das Verfahren nach Anspruch 3, wobei die neue Fluidquelle (170) über eine Fluidleitung (180) mit der Fluidabgabevorrichtung verbunden ist.

5. Das Verfahren nach einem der Ansprüche 1 bis 4, wobei die neue Fluidquelle (170) auf einer Werkzeugseite des Roboterreparatursystems (120) montiert ist.

6. Das Verfahren nach Anspruch 5, wobei der erste Sensor ein Gewichtssensor ist, der ein Gewicht der verwendeten Fluidquelle (170), das den Ersatzfluidpegel angibt, detektiert.

7. Das Verfahren nach einem der Ansprüche 1 bis 6, wobei der erste Sensor oder der zweite Sensor jeweils ausgewählt sind aus: einem Gewichtssensor, einem Volumensensor oder einem optischen Sensor.

8. Das Verfahren nach einem der Ansprüche 1 bis 7 und ferner aufweisend: Detektieren des Fluidtyps in der neuen Fluidquelle und Bereitstellen des detektierten Fluidtyps an eine Kontrollvorrichtung, die der Roboterreparatureinheit zugeordnet ist.

9. Eine Roboterreparatureinheit (120), aufweisend:
einen Roboterarm mit einer Kraftkontrolle, der mit einem Endeffektor (126), der ein Schleifwerkzeug enthält, gekoppelt ist; und
ein in sich geschlossenes Fluidabgabesystem (300), das konfiguriert ist, um ein Fluid auf einer Arbeitsoberfläche abzugeben, wobei das in sich geschlossene Fluidabgabesystem aufweist:
eine Fluidabgabevorrichtung (310);
einen Fluidbehälter (340), der mit der Fluidabgabevorrichtung gekoppelt ist, und wobei der Fluidbehälter an der Roboterreparatureinheit montiert ist, **dadurch gekennzeichnet, dass** der Fluidbehälter auf einer Werkzeugseite einer Kraftkontrolleinheit (124) des Roboterarms montiert ist; und
die Kraftkontrolle, die zum Detektieren einer Gewichtsänderung des Fluidbehälters, die mit einem niedrigen Fluidpegel korrespondiert, in der Lage ist.

10. Die Roboterreparatureinheit (120) nach Anspruch 9, wobei der Fluidbehälter (340) eine Fluidauskleidung aufweist, die konfiguriert ist, um das abzugebende Fluid zu enthalten.

11. Die Roboterreparatureinheit (120) nach Anspruch 10 und ferner aufweisend eine Fluidleitung (180), die die Fluidauskleidung mit der Fluidabgabevorrichtung (310) koppelt.

12. Die Roboterreparatureinheit (120) nach Anspruch 11 und ferner aufweisend eine Pumpe zur einmaligen Verwendung.

13. Die Roboterreparatureinheit (120) nach einem der Ansprüche 9 bis 12, wobei die Fluidabgabevorrichtung (310) eine Einwegdüse aufweist.

14. Die Roboterreparatureinheit (120) nach einem der Ansprüche 9 bis 13 und ferner aufweisend einen Detektor, der konfiguriert ist, um einen Fluidtyp in einem Fluidbehälter zu identifizieren.

15. Die Roboterreparatureinheit (120) nach Anspruch 14, wobei der Detektor konfiguriert ist, um den Fluidtyp basierend auf einer Kennzeichnung auf dem Fluidbehälter zu identifizieren.

## Revendications

1. Procédé de remplacement d'une source de fluide (170) sur un système de réparation robotique (120), le procédé comprenant :
la détection, à l'aide d'un premier capteur, d'un niveau de fluide de remplacement dans une source de fluide usagée, dans lequel la source de fluide usagée est montée sur un côté outil d'une unité de commande de force (124) du bras robotique, et dans lequel la commande de force est capable de détecter une variation de poids du réservoir de fluide correspondant à un faible niveau de fluide ;
l'élimination de la source de fluide usagée ;
l'installation d'une nouvelle source de fluide ; et
la détection, à l'aide d'un second capteur, de la nouvelle source de fluide.

2. Procédé selon la revendication 1, dans lequel l'installation de la nouvelle source de fluide (170) comprend l'installation d'une nouvelle source de fluide dans un réservoir monté sur le système de réparation robotique (120).

3. Procédé selon la revendication 1 ou 2, dans lequel l'installation de la nouvelle source de fluide (170) comprend le raccordement de la nouvelle source de fluide à un distributeur de fluide monté sur le système de réparation robotique (120).

4. Procédé selon la revendication 3, dans lequel la nouvelle source de fluide (170) est raccordée au distributeur de fluide par une conduite de fluide (180).

5. Procédé selon l'une quelconque des revendications 1 à 4, dans lequel la nouvelle source de fluide (170) est montée sur un côté outil du système de réparation robotique (120).

6. Procédé selon la revendication 5, dans lequel le premier capteur est un capteur de poids qui détecte un poids de la source de fluide (170) usagée indicatif du niveau de fluide de remplacement.

7. Procédé selon l'une quelconque des revendications 1 à 6, dans lequel le premier capteur ou le second capteur est chacun choisis parmi : un capteur de poids, un capteur volumétrique, ou un capteur optique.

8. Procédé selon l'une quelconque des revendications 1 à 7, et comprenant en outre : la détection du type de fluide dans la nouvelle source de fluide et la fourniture du type de fluide détecté à un dispositif de commande associé à l'unité de réparation robotique.

9. Unité de réparation robotique (120) comprenant :
un bras robotique avec une commande de force, couplé à un effecteur terminal (126) contenant un outil abrasif ; et
un système de distribution de fluide autonome (300) conçu pour distribuer un fluide sur une surface de travail, dans laquelle le système de distribution de fluide autonome comprend :
un distributeur de fluide (310) ;
un réservoir de fluide (340) accouplé au distributeur de fluide, et dans laquelle le réservoir de fluide est monté sur l'unité de réparation robotique, **caractérisée en ce que** le réservoir de fluide est monté sur un côté outil d'une unité de commande de force (124) du bras robotique ; et
la commande de force capable de détecter une variation de poids du réservoir de fluide correspondant à un faible niveau de fluide.

10. Unité de réparation robotique (120) selon la revendication 9, dans laquelle le réservoir de fluide (340) comprend une chemise à fluide qui est conçue pour contenir un fluide à distribuer.

11. Unité de réparation robotique (120) selon la revendication 10, et comprenant en outre une conduite de fluide (180) accouplant la chemise à fluide au distributeur de fluide (310).

12. Unité de réparation robotique (120) selon la revendication 11, et comprenant en outre une pompe à usage unique.

13. Unité de réparation robotique (120) selon l'une quelconque des revendications 9 à 12, dans laquelle le distributeur de fluide (310) comprend une buse jetable.

14. Unité de réparation robotique (120) selon l'une quelconque des revendications 9 à 13, et comprenant en outre un détecteur conçu pour identifier un type de fluide dans un réservoir de fluide.

15. Unité de réparation robotique (120) selon la revendication 14, dans laquelle le détecteur est conçu pour identifier le type de fluide sur la base d'un symbole sur le réservoir de fluide.
